# EUROPEAN PATENT SPECIFICATION

(11) **EP 3 790 304 B1**
(45) Date of publication and mention of the grant of the patent: **24.05.2023**
(21) Application number: 19834532.4
(22) Date of filing: 12.06.2019
(51) Int. Cl.: H04W 16/18, H04W 16/28, H04W 72/04

(54) **METHOD FOR SENDING INFORMATION, BASE STATION AND COMPUTER-READABLE STORAGE MEDIUM**
VERFAHREN ZUM SENDEN VON INFORMATIONEN, BASISSTATION UND COMPUTERLESBARES SPEICHERMEDIUM
PROCÉDÉ D'ENVOI D'INFORMATIONS, STATION DE BASE ET SUPPORT DE STOCKAGE LISIBLE PAR ORDINATEUR

(30) Priority: 10.07.2018 CN 201810753118
(43) Date of publication of application: 10.03.2021
(73) Proprietor: Huawei Technologies Co., Ltd., Longgang District Shenzhen, Guangdong 518129 (CN)
(72) Inventor: LI, Yuan, Shenzhen, Guangdong 518129 (CN); ZHANG, Pengcheng, Shenzhen, Guangdong 518129 (CN); FAN, Hua, Shenzhen, Guangdong 518129 (CN)
(74) Representative: Pfenning, Meinig & Partner mbB
(86) International application number: PCT/CN2019/090924
(87) International publication number: WO 2020/010985

(56) References cited:
- CN-A- 1 874 186
- CN-A- 101 394 648
- CN-A- 101 951 679
- CN-A- 107 667 541
- US-A1- 2015 181 440
- US-A1- 2017 245 165
- US-A1- 2017 359 791
- Luo ET AL: "Document Number: H2020-ICT-671650-mmMAGIC/D4.2 Project Name: Millimetre-Wave Based Mobile Radio Access Network for Fifth Generation Integrated Communications (mmMAGIC) Final radio interface concepts and evaluations for mm-wave mobile communications", , 30 June 2017 (2017-06-30), XP055581264, Retrieved from the Internet: URL:https://bscw.5g-mmmagic.eu/pub/bscw.cg i/d214055/mmMAGIC_D4.2.pdf [retrieved on 2019-04-15]
- CMCC: "On Gradual UE-Specific (GUS) beamformed control channel", 3GPP DRAFT; R1-164891, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096833, Retrieved from the Internet: URL:http://www.3gpp.org/ftp/tsg_ran/WG1_RL 1/TSGR1_85/Docs/ [retrieved on 2016-05-13]

## Description

This application claims priority to Chinese Patent Application No. 201810753118.X, filed with the Chinese Patent Office on July 10, 2018 and entitled "TERMINAL COVERAGE METHOD, COMMUNICATIONS APPARATUS, AND COMPUTER-READABLE STORAGE MEDIUM".

### TECHNICAL FIELD

This application relates to the field of communications technologies, and in particular, to a method for sending information, a base station, and a computer-readable storage medium.

### BACKGROUND

In a communications system, when a terminal is farther away from a base station, the base station cannot cover the terminal. For example, if a terminal, which is an IoT terminal, is out of coverage of the base station, the IoT terminal cannot normally communicate with the base station.

US 2017/245165 A1 describes user equipment that includes a transceiver and a processor operably connected to the transceiver. The transceiver is configured to receive reference signal (RS) resource configuration information and at least two RSs. The processor is configured to measure at least one of the at least two RSs. A first RS of the at least two RSs is non-UE-specifically configured and a second RS of the at least two RSs is UE-specifically configured. US 2015/181440 A1 describes that a base station may select different coverage enhancement techniques for different channels, and transmit the channels using the selected coverage enhancement techniques. Examples of coverage enhancement techniques that may be selected include repetition within subframes, repetition across different subframes, power boosting, and spatial multiplexing. US 2017/359791 A1 describes a primary synchronization signal (PSS), a secondary synchronization signal (SSS), and a primary broadcast channel (PBCH) received in a multiplex wherein cell identification information can be decoded from at least the PSS and the SSS and a master information block (MIB) can be decoded from the PBCH. Further prior art useful for understanding the background of the present invention is described in CMCC, "On Gradual UE-Specific (GUS) beamformed control channel", vol. RAN WG1, no. Nanjing, China; 20160523-20160527, (20160513), 3GPP DRAFT; R1-164891, and Luo et al: "Document Number: H2020-ICT-671650-mmMAGIC/D4.2 Project Name: Millimetre-Wave Based Mobile Radio Access Network for Fifth Generation Integrated Communications (mmMAGIC) Final radio interface concepts and evaluations for mm-wave mobile communications", (20170630), URL: https://bscw.5g-mmmagic.eu/pub/bscw.cgi/d214055/mmMAGIC_D4.2.pdf.

In the prior art, a base station is added to enable an IoT terminal in a blind spot to connect to the added base station. However, adding a base station causes relatively high costs. In addition, because information traffic exchanged between an IoT terminal and a base station is low and communication is usually performed only once in several hours or even several days, adding a base station causes relatively low air interface resource utilization.

### SUMMARY

Embodiments of the present invention are defined by the independent claims. Preferred embodiments are defined in the dependent claims. This application provides a method for sending information, a base station, and a computer-readable storage medium, to increase a coverage capability and a coverage gain of a channel with a limited repetition count, and ensure normal communication between a terminal and a base station.

According to a first aspect, this application provides a method for sending information as according to claim 1, where the method includes: obtaining, by a network device, position information of a terminal in a cell relative to the network device; dividing, by the network device, the cell into a plurality of areas based on the position information of the terminal in the cell relative to the network device such that the terminal is not located in an overlapping part of adjacent areas; and sending, by the network device, information to terminals in different areas of the plurality of areas at different time points, where the information is carried on a channel with a maximum repetition count less than a threshold. According to the solution provided in this embodiment, signal strength of a channel with a limited repetition count can be increased. This increases a coverage capability and a coverage gain of the channel, and ensures normal communication between the terminal in the area and a base station.

The network device is a base station, the position information is a distance and a direction from the base station to the terminal, and the channel with a maximum repetition count less than a threshold includes a physical broadcast channel PBCH.

In a possible design, the dividing, by the network device, the cell into a plurality of areas based on the position information of the terminal in the cell relative to the network device includes: dividing, by the network device, the cell into the plurality of areas of a same size based on the position information of the terminal in the cell relative to the network device.

In a possible design, the dividing, by the network device, the cell into a plurality of areas based on the position information of the terminal in the cell relative to the network device includes: determining, by the network device, a terminal that is farthest away from the network device in the cell based on the position information of the terminal in the cell relative to the network device; and dividing, by the network device, the cell into the plurality of areas based on position information of the terminal that is farthest away from the network device in the cell. In a possible design, some of the plurality of areas are of different sizes.

In a possible design, before the sending, by the network device, information to terminals in different areas of the plurality of areas at different time points, the method further includes: determining, by the network device, at least one area from the plurality of areas based on terminal activation period and a channel receive time window corresponding to a terminal in each of the plurality of areas, where a terminal in the determined at least one area receives the information within the terminal activation period.

In this case, the sending, by the network device, information to terminals in different areas of the plurality of areas at different time points includes: dividing, by the network device, the terminal activation period into a plurality of time periods based on a channel receive time window corresponding to the terminal in the determined at least one area, where the plurality of time periods include a target time period corresponding to each of the determined at least one area; and sending, by the network device within the target time period, the information to a terminal in the area corresponding to the target time period for a plurality of times.

In a possible design, a beam width corresponding to the information is related to a size of the area in which the terminal receives the information.

According to a second aspect, this application provides a base station as according to claim 5.

According to a third aspect, this application provides a computer-readable storage medium, where the computer-readable storage medium stores a computer program, and when the program runs on a computer, the computer is enabled to perform the method according to the first aspect.

It can be learned that in the foregoing aspects, the network device divides the cell into the plurality of areas based on the position information of the terminal in the cell relative to the base station as defined above, and sends, in a time division manner, the information carried on the channel with a limited repetition count to the terminal in the at least one target area in the plurality of areas. Compared with that the network device sends, at a specific power, the channel with a limited repetition count to the terminal in the cell, when the network device sends, at the power, the channel with a limited repetition count to terminals in each area, this method increases signal strength of the channel, increases a coverage capability and a coverage gain of the channel, and ensures normal communication between the terminal in the area and a base station.

### BRIEF DESCRIPTION OF DRAWINGS

FIG. 1 is a schematic diagram of an application scenario;
FIG. 2 is a flowchart of a terminal coverage method according to this application;
FIG. 3 is a schematic diagram of another application scenario according to this application;
FIG. 4 is a schematic diagram of still another application scenario according to this application;
FIG. 5 is a schematic diagram of yet another application scenario according to this application;
FIG. 6 is a schematic diagram of yet another application scenario according to this application;
FIG. 7 is a schematic diagram of yet another application scenario according to this application;
FIG. 8 is a schematic diagram of yet another application scenario according to this application;
FIG. 9 is a schematic diagram of yet another application scenario according to this application;
FIG. 10 is a schematic diagram of a structure of a communications apparatus,
FIG. 11 is a schematic diagram of a structure of a communications apparatus according to an embodiment of this application;
FIG. 12 is a schematic diagram of a structure of still another communications apparatus; and
FIG. 13 is a schematic diagram of a structure of still another communications apparatus;

### DESCRIPTION OF EMBODIMENTS

Terms used in DESCRIPTION OF EMBODIMENTS of this application are only used to explain specific embodiments of this application, and are not intended to limit this application.

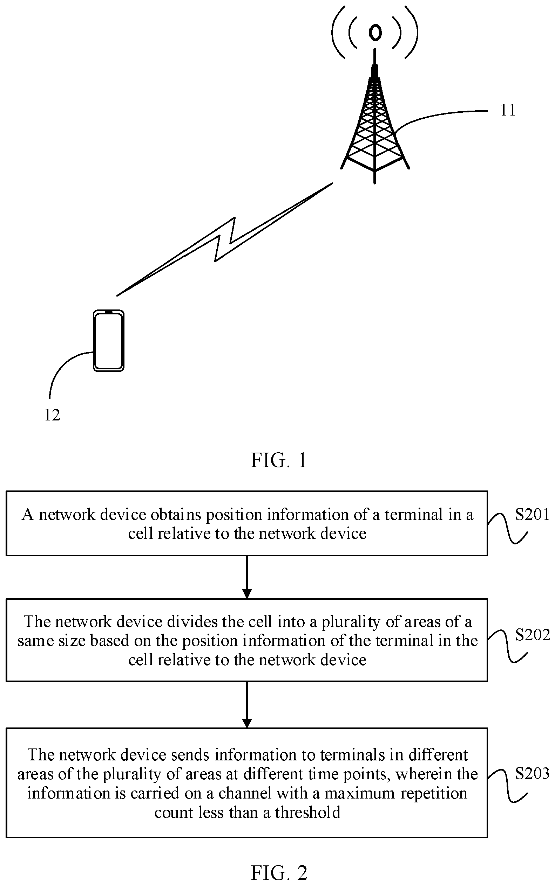

The embodiments of this application may be applied to various types of communications systems, FIG. 1 is a schematic diagram of an application scenario according to an embodiment of this application, wherein, however, a communications system as such is not covered by the claimed invention. A communications system shown in FIG. 1 mainly includes a network device 11 and a terminal 12.
(1) The network device 11 may be a network-side device, for example, a Wireless Fidelity (Wireless-Fidelity, WIFI) access point AP, a base station in next generation communications such as a gNB, a small cell, a micro base station, or a TRP in 5G, or may be a relay station, an access point, an in-vehicle device, a wearable device, or the like. In this embodiment, base stations in communications systems of different communications standards are different. For ease of distinguishing, a base station in a 4G communications system is referred to as an LTE eNB, a base station in a 5G communications system is referred to as an NR gNB, and a base station that supports both a 4G communications system and a 5G communications system is referred to as an eLTE eNB. These names are merely for ease of distinguishing, and are not intended for limitation.
(2) The terminal 12, also referred to as user equipment (User Equipment, UE), is a device that provides a user with voice and/or data connectivity, for example, a handheld device or an in-vehicle device that has a wireless connection function. Common terminals include, for example, a mobile phone, a tablet computer, a notebook computer, a palmtop computer, a mobile internet device (mobile internet device, MID), and a wearable device such as a smart watch, a smart band, or a pedometer.
(3) "A plurality of" indicates two or more, and another quantifier is similar to this. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects.

It should be noted that, a quantity and a type of the terminals 12 included in the communications system shown in FIG. 1 are merely an example, and this embodiment of this application, which, regarding the communications system, is not covered by the claimed invention, is not limited thereto. For example, more terminals 12 that communicate with the network device 11 may be further included. For brevity, details are not described in the accompanying drawings. In addition, in the communications system shown in FIG. 1, although the network device 11 and the terminal 12 are shown in FIG. 1, the communications system may include but is not limited to the network device 11 and the terminal 12, for example, may further include a core network device node or a device used for a virtualized network function. This is obvious to persons of ordinary skill in the art, and details are not described herein.

In addition, the embodiments of this application may be applied to not only a next-generation wireless communications system, that is, a 5G communications system, but also another system that may appear in the future, for example, a next-generation Wi-Fi network or a 5G Internet of Vehicles.

In a communications system, when a terminal is farther away from a base station, the base station cannot cover the terminal. In other words, the terminal may not receive information sent by the base station. Generally, the base station may repeatedly send the information for a plurality of times to increase a signal to interference plus noise ratio (Signal to Interference plus Noise Ratio, SINR) of the information, so that the terminal can receive the information. Specifically, when the base station sends to the terminal a common traffic channel and a control channel, for example, a physical uplink shared channel (Physical Uplink Shared Channel, PUSCH), a physical downlink shared channel (Physical Downlink Shared Channel, PDSCH), and a physical downlink control channel (Physical Downlink Control Channel, PDCCH), a coverage can be expanded by increasing a repetition count. However, for a channel similar to a physical broadcast channel (Physical Broadcast Channel, PBCH) whose format is relatively fixed, a repetition count is limited. In other words, compared with maximum repetition counts of the PUSCH, the PDSCH, and the PDCCH, a maximum repetition count of the PBCH is relatively small. Consequently, a repetition gain of the PBCH is constrained. In an Internet of Things based on base station communication, keeping a connection between a base station and a terminal is more important than information traffic exchanged between the base station and the terminal, and the channel similar to the PBCH will become a bottleneck channel in a deep coverage scenario such as a basement, an underground well, or an isolated base station in a mountainous area caused by a natural disaster like an earthquake or a mountain flood. In the prior art, a base station is added in the deep coverage scenario to enable a terminal in a blind spot, for example, an IoT terminal, to connect to the added base station. However, adding a base station causes relatively high costs. In addition, because information traffic exchanged between an IoT terminal and a base station is low and communication is usually performed only once in several hours or even several days, adding abase station causes relatively low air interface resource utilization. To resolve the problem, this embodiment provides a terminal coverage method. The following describes the terminal coverage method in detail with reference to the embodiment.

FIG. 2 is a flowchart of the terminal coverage method according to this application, wherein, however, not all of the features required by the claimed invention are shown in FIG. 2. As shown in FIG. 2, the terminal coverage method in this embodiment includes the following steps.

Step S201: A network device obtains position information of a terminal in a cell relative to the network device.

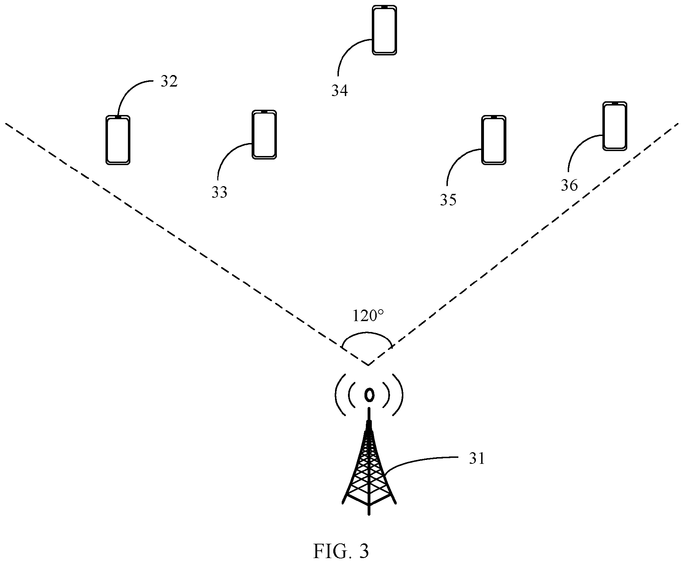

In this embodiment, a cell corresponding to a base station includes a plurality of terminals. It may be understood that the cell may be an omnidirectional cell covered by an omnidirectional antenna of the base station, or the cell is a sector covered by a directional antenna of the base station. In this embodiment, the sector covered by the directional antenna of the base station is used as an example. As shown in FIG. 3, a sector corresponding to a base station 31 includes a terminal 32, a terminal 33, a terminal 34, a terminal 35, and a terminal 36. Optionally, the sector is covered by a 120-degree fan antenna of the base station 31.

In this embodiment, the terminal 32, the terminal 33, the terminal 34, the terminal 35, and the terminal 36 may specifically be IoT terminals. The IoT terminals may be applied to a deep coverage scenario. In this embodiment, position information of the IoT terminal relative to the base station may be relatively fixed. According to the invention, the position information of the IoT terminal relative to the base station includes a distance and a direction from the base station to the IoT terminal. Optionally, the base station 31 prestores position information of the terminal 32, the terminal 33, the terminal 34, the terminal 35, and the terminal 36, or the base station 31 separately receives the respective position information from the terminal 32, the terminal 33, the terminal 34, the terminal 35, and the terminal 36. Further, the base station 31 determines position information of the terminal 32, the terminal 33, the terminal 34, the terminal 35, and the terminal 36 relative to the base station 31 based on the position information of the terminal 32, the terminal 33, the terminal 34, the terminal 35, and the terminal 36, and position information of the base station 31, that is, a distance and a direction from the base station 31 to each of the terminal 32, the terminal 33, the terminal 34, the terminal 35, and the terminal 36.

Step S202: The network device divides the cell into a plurality of areas based on the position information of the terminal in the cell relative to the network device.

Optionally, the base station 31 divides the sector corresponding to the base station 31 into a plurality of areas based on the distance and the direction from the base station 31 to each of the terminal 32, the terminal 33, the terminal 34, the terminal 35, and the terminal 36.

In an implementation, the network device divides the cell into the plurality of areas of a same size based on the position information of the terminal in the cell relative to the network device.

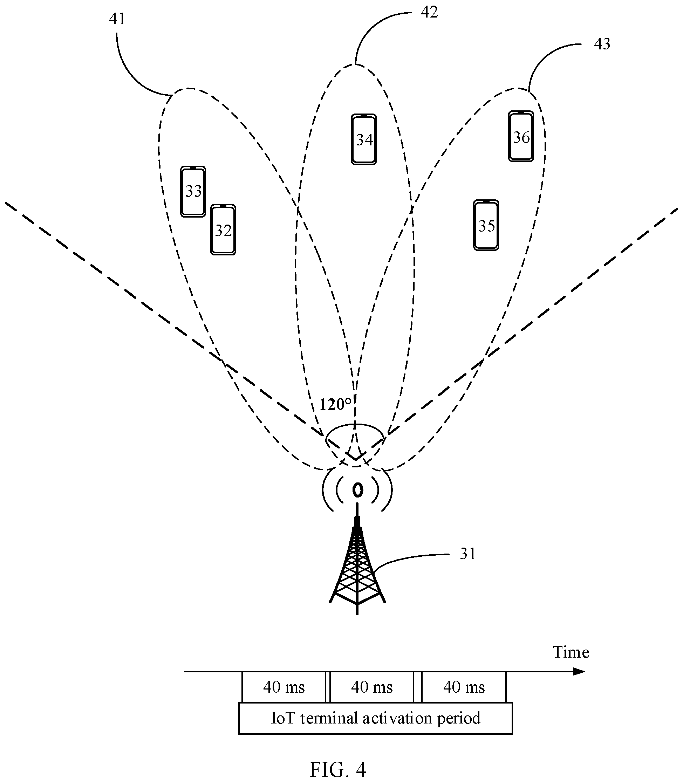

As shown in FIG. 4, it is assumed that the distance from the base station 31 to each of the terminal 32, the terminal 33, the terminal 34, the terminal 35, and the terminal 36 is within a preset range, and the terminal 32, the terminal 33, the terminal 34, the terminal 35, and the terminal 36 are evenly distributed in the sector, the base station 31 may divide the sector corresponding to the base station 31 into the plurality of areas of a same size based on the distance and the direction from the base station 31 to each of the terminal 32, the terminal 33, the terminal 34, the terminal 35, and the terminal 36, for example, an area 41, an area 42, and an area 43. The area 41 includes the terminal 32 and the terminal 33, the area 42 includes the terminal 34, and the area 43 includes the terminal 35 and the terminal 36.

In another implementation, the network device determines a terminal that is farthest away from the network device in the cell based on the position information of the terminal in the cell relative to the network device. The network device divides the cell into the plurality of areas based on position information of the terminal that is farthest away from the network device in the cell. Optionally, some of the plurality of areas are of different sizes.

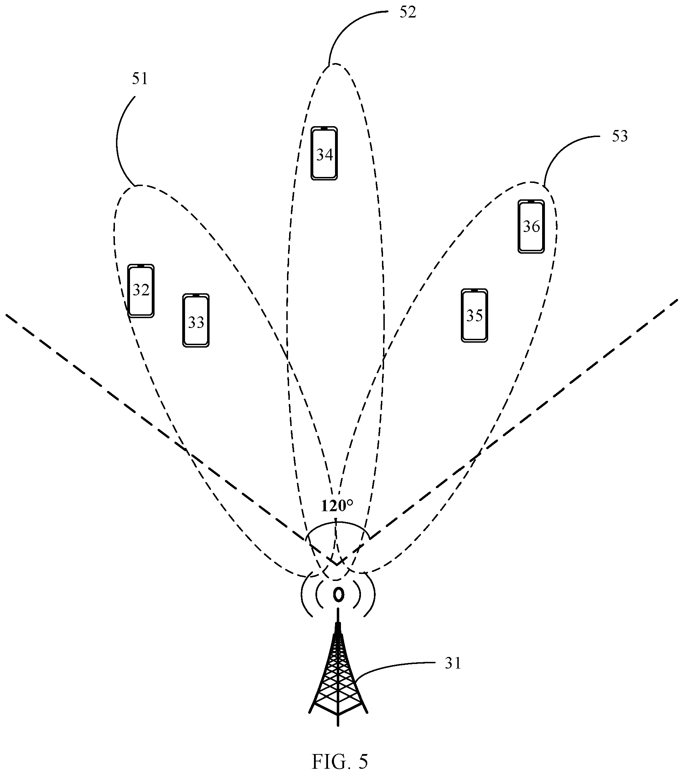

As shown in FIG. 5, it is assumed that the distance from the base station 31 to each of the terminal 32, the terminal 33, the terminal 35, and the terminal 36 is within a preset range, and the distance from the base station 31 to the terminal 34 is beyond the preset range. For example, the terminal 34 is farther away from the base station 31, and the terminal 32, the terminal 33, the terminal 35, and the terminal 36 are closer to the base station 31. The base station 31 may divide the sector corresponding to the base station 31 into the plurality of areas whose sizes are not completely equal based on the distance and the direction from the base station 31 to each of the terminal 32, the terminal 33, the terminal 34, the terminal 35, and the terminal 36, for example, an area 51, an area 52, and an area 53. The area 52 is narrower, the area 51 and the area 53 are wider, and the area 51 and the area 53 have a same size. The area 51 includes the terminal 32 and the terminal 33, the area 52 includes the terminal 34, and the area 53 includes the terminal 35 and the terminal 36.

For example, the base station 31 determines a terminal, for example, the terminal 34, that is farthest from the base station 31 based on the distance from the base station 31 to each of the terminal 32, the terminal 33, the terminal 34, the terminal 35, and the terminal 36. Further, the base station 31 divides the sector corresponding to the base station 31 into the plurality of areas whose sizes are not completely equal based on the distance and the direction from the base station 31 to the terminal 34, for example, the area 51, the area 52, and the area 53 shown in FIG. 5.

As shown in FIG. 4 or FIG. 5, after the sector corresponding to the base station 31 is divided into the plurality of areas, there is an overlapping part in adjacent areas. Therefore, when the sector is divided, the terminal should not be located in the overlapping part of the adjacent areas.

In addition, as shown in FIG. 4 or FIG. 5, the base station 31 divides the sector into three areas. In other embodiments, the sector is not limited to being divided into three areas, and may be further divided into two areas or at least three areas.

It may be understood that, a method for dividing a sector corresponding to the base station into a plurality of areas is not limited to the method described in this embodiment, and the sector may, in embodiments not covered by the claimed invention, also be divided according to another method, for example, the sector may be divided based on a relative location relationship between terminals in the sector, density of the terminals, or the like.

Step S203: The network device sends information to terminals in different areas of the plurality of areas at different time points, where the information is carried on a channel with a maximum repetition count less than a threshold.

FIG. 4 is used as an example. The base station 31 may send information to terminals in different areas at different time points, where the information is carried on a channel with a maximum repetition count less than a threshold, the channel with a maximum repetition count less than the threshold is a channel with a limited repetition count, and the channel with a limited repetition count includes a physical broadcast channel PBCH. In other words, the base station 31 sends PBCHs to the different areas at different time points. For example, the base station 31 sends a PBCH to a terminal in the area 41 in a first time period, sends a PBCH to a terminal in the area 42 in a second time period, and sends a PBCH to a terminal in the area 43 in a third time period.

In this embodiment, an activation period of the IoT terminal is 120 milliseconds, that is, within the activation period of the IoT terminal, the IoT terminal may receive the PBCH channel sent by the base station. As shown in FIG. 4, a channel receive time window of the terminal 32, the terminal 33, the terminal 34, the terminal 35, and the terminal 36 is 40 milliseconds. Because the base station 31 divides the sector into three areas, the base station 31 may send the PBCHs to the terminals in the area 41, the area 42, and the area 43 in a time division manner within the activation period of the IoT terminal. In other words, the area 41, the area 42, and the area 43 are target areas within the activation period of the IoT terminal, and the base station 31 sends the PBCHs to the target areas within the activation period of the IoT terminal. For example, the base station 31 may send a PBCH to the terminal in the area 41 within a first 40 milliseconds within the activation period of the IoT terminal, send a PBCH to the terminal in the area 42 within a second 40 milliseconds, and send a PBCH to the terminal in the area 43 within a third 40 milliseconds. This is merely an example for description herein, and a correspondence between each area and each 40 milliseconds included within the activation period of the IoT terminal is not limited.

In a possible manner, the base station 31 repeatedly sends a PBCH to a terminal in a corresponding area for a plurality of times within each 40 milliseconds, but a repetition count of sending is relatively small. In other words, the repetition count of sending the PBCH is limited. Specifically, the base station 31 repeatedly sends the PBCH to the terminal in the corresponding area for a plurality of times within each 40 milliseconds by using a narrow beam, where a beam width of the narrow beam is related to a size of the corresponding area. Optionally, the base station 31 sends a plurality of narrow beams within each 40 milliseconds in a time division manner, and each narrow beam is corresponding to one PBCH.

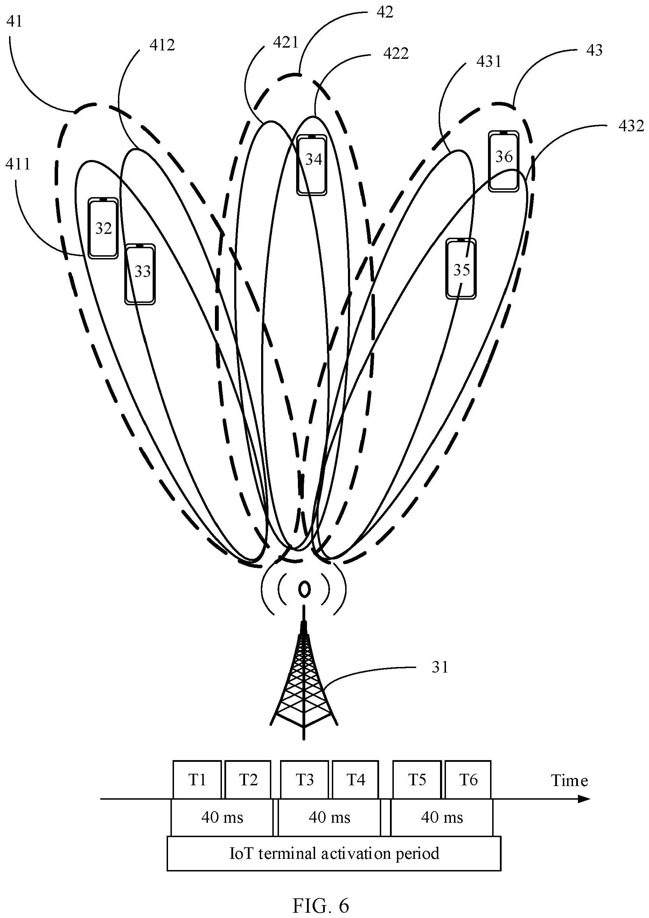

As shown in FIG. 6, 411 and 412 indicate narrow beams sent by the base station 31 in a time division manner within the first 40 milliseconds. The base station 31 may send the narrow beam 411 within a time period T1, and send the narrow beam 412 within a time period T2. 421 and 422 indicate narrow beams sent by the base station 31 in a time division manner within the second 40 milliseconds. The base station 31 may send the narrow beam 421 within a time period T3, and send the narrow beam 422 within a time period T4. 431 and 432 indicate narrow beams sent by the base station 31 in a time division manner within the third 40 milliseconds. The base station 31 may send the narrow beam 431 within a time period T5, and send the narrow beam 432 within a time period T6.

It may be understood that the base station 31 is not limited to sending two narrow beams within each 40 milliseconds. This is merely an example for description herein. Correspondingly, a terminal in each area may receive a plurality of narrow beams within 40 milliseconds, and after superimposing the plurality of narrow beams, the terminal may parse, from noise, a wanted signal, that is, information carried on a PBCH.

In this embodiment, as shown in FIG. 3, a transmit power at which the base station 31 sends a PBCH to a terminal in the 120-degree sector each time is denoted as P. As shown in FIG. 4 or FIG. 5, the base station 31 divides the 120-degree sector into the plurality of areas, and when the base station 31 sends a PBCH to one of the plurality of areas, a transmit power used is also P. FIG. 4 is used as an example. It is assumed that an included angle between each area and the base station 31 is 40 degrees, that is, in FIG. 4, a transmit power used by the base station 31 to send a PBCH to a terminal in a 40-degree area is the same as a transmit power used by the base station 31 to send a PBCH to a terminal in the 120-degree sector in FIG. 3. In this case, strength of a signal received by the terminal in the 40-degree area from the base station 31 is greater than strength of a signal received by the terminal in the 120-degree sector from the base station 31. Therefore, when the base station sends, in a time division manner, the channel with a limited repetition count, for example, the PBCH, to the plurality of areas formed after the sector is divided, signal strength of the PBCH can be increased. This increases a coverage capability and a coverage gain of the PBCH.

It should be noted that an IoT terminal and a non-IoT terminal may share one base station, and the non-IoT terminal may be specifically a common Long Term Evolution (Long Term Evolution, LTE for short) terminal. That is, the sector described in this embodiment not only includes an IoT terminal, but also may include a common LTE terminal. The base station may stagger, in a time domain, the activation period of the IoT terminal and activation duration of the common LTE terminal in the sector by using differentiated parameter configuration. This improves a coverage gain of the PBCH received by the IoT terminal without affecting the common LTE terminal.

In addition, in this embodiment, that the sector is divided into a plurality of areas is used as an example. This embodiment may also be applicable to a scenario in which an omnidirectional cell is divided into a plurality of areas. A specific implementation is similar to an implementation in the embodiment shown in FIG. 4, FIG. 5, or FIG. 6, and details are not described herein again. In addition, the method described in this embodiment is not only applicable to an IoT terminal, but also applicable to a common LTE terminal. In other words, when the common LTE terminal is farther away from the base station, or a signal for keeping a connection between the common LTE terminal and the base station is weaker, the base station may also improve a coverage gain of a PBCH received by the common LTE terminal by using the method in this embodiment.

In this embodiment, the network device divides the cell into the plurality of areas based on the position information of the terminal in the cell relative to the network device, and sends, in a time division manner, the information carried on the channel with a limited repetition count to a terminal in at least one target area in the plurality of areas. Compared with that the network device sends, at a specific power, the channel with a limited repetition count to the terminal in the cell, when the network device sends, at the power, the channel with a limited repetition count to terminals in each area, this method increases signal strength of the channel, increases a coverage capability and a coverage gain of the channel, and ensures normal communication between the terminal in the area and the base station.

Based on the foregoing embodiment, before the network device sends the information to the terminals in the different areas of the plurality of areas at different time points, the network device may further determine the at least one target area from the plurality of areas, and the terminal in the at least one target area receives the information in the terminal activation period.

FIG. 4 is used as an example. The base station 31 divides the sector into three areas, and a channel receive time window of a terminal in each area is 40 milliseconds. Within the activation period of the IoT terminal, for example, 120 milliseconds, the base station 31 may send PBCHs to the terminals in the area 41, the area 42, and the area 43 in a time division manner. In this embodiment, the terminal activation period is specifically the activation period of the IoT terminal. After dividing the sector, the base station 31 may obtain two areas or at least three areas. In addition, the channel receive time window of a terminal in each area may not all be 40 milliseconds, and channel receive time windows of some of the terminals may be 60 milliseconds or 80 milliseconds. As a result, the base station 31 may fail to send a PBCH to each area within 120 milliseconds, or/and the base station 31 needs different duration to send PBCHs to different areas within the 120 milliseconds. Therefore, the base station 31 needs to determine, from the plurality of areas obtained by dividing the sector, areas in which terminals need to receive the PBCHs within the 120 milliseconds, and a terminal in another area needs to receive a PBCH in another activation period of the IoT terminal.

In a possible manner, the network device determines the at least one target area from the plurality of areas based on the terminal activation period and the channel receive time window corresponding to the terminal in each of the plurality of areas. The network device divides the terminal activation period into a plurality of time periods based on the channel receive time window corresponding to the terminal in the at least one target area, where the plurality of time periods include a target time period corresponding to each of the at least one target area. The network device sends, within the target time period, the information to the terminal in the target area corresponding to the target time period for a plurality of times.

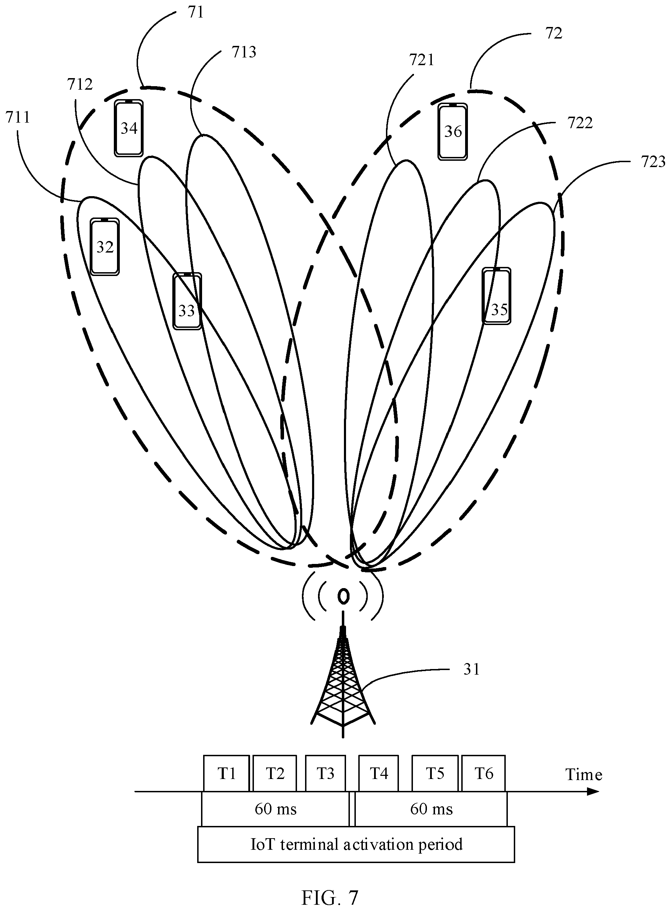

As shown in FIG. 7, the base station 31 divides the sector into an area 71 and an area 72, where the area 71 includes the terminal 32, the terminal 33, and the terminal 34, and the area 72 includes the terminal 35 and the terminal 36. In the area 71, the terminal 34 is farthest from the base station 31, and in the area 72, the terminal 36 is farthest from the base station 31. Optionally, channel receive time windows of the terminal 34 and the terminal 36 are both 60 milliseconds. The base station 31 determines that PBCHs may be sent to the area 71 and the area 72 within one activation period of the IoT terminal in a time division manner based on the activation period of the IoT terminal, for example, 120 milliseconds, and channel receive time windows, for example, 60 milliseconds, of the terminals that are in the area 71 and the area 72 and that are farthest away from the base station 31. In other words, the area 71 and the area 72 are target areas within the activation period of the IoT terminal. Further, the base station 31 divides the activation period of the IoT terminal into a first 60 milliseconds and a second 60 milliseconds, sends a PBCH to the terminal in the area 71 for a plurality of times within the first 60 milliseconds, and sends a PBCH to the terminal in the area 72 for a plurality of times within the second 60 milliseconds. Alternatively, the base station 31 sends the PBCH to the terminal in the area 72 for a plurality of times within the first 60 milliseconds, and sends the PBCH to the terminal in the area 71 for a plurality of times within the second 60 milliseconds. As shown in FIG. 7, 711, 712, and 713 indicate narrow beams sent by the base station 31 to the area 71 within the first 60 milliseconds in a time division manner, and the base station 31 sequentially sends the narrow beam 711, the narrow beam 712, and the narrow beam 713 within time period T1, T2, and T3. 721, 722, and 723 indicate narrow beams sent by the base station 31 to the area 72 within the second 60 milliseconds in a time division manner, and the base station 31 sequentially sends the narrow beam 721, the narrow beam 722, and the narrow beam 723 within time periods T4, T5, and T6. Optionally, each narrow beam corresponds to one PBCH.

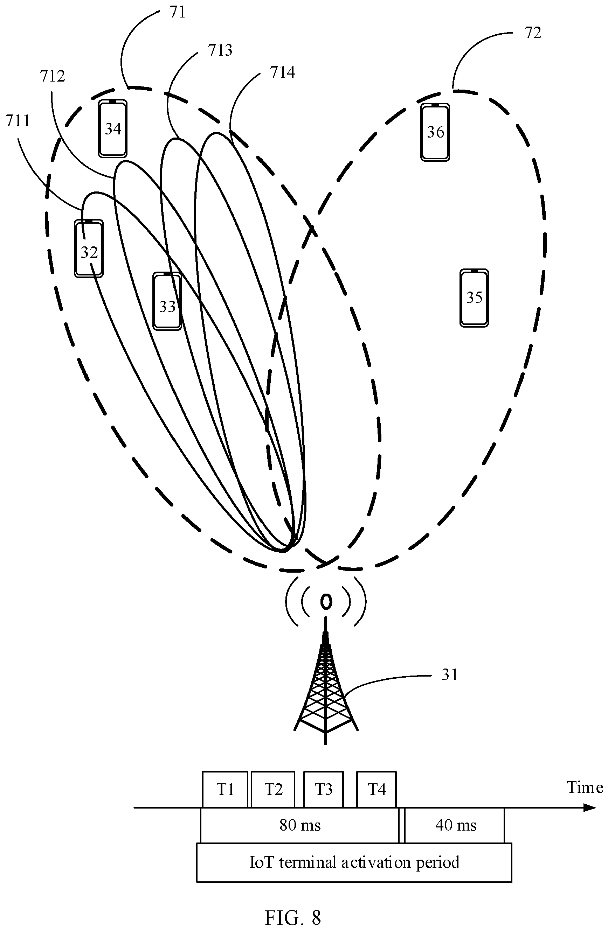

Based on FIG. 7, if the channel receive time windows of the terminal 34 and the terminal 36 are both 80 milliseconds, the base station 31 cannot send the PBCHs to the area 71 and the area 72 within one activation period of the IoT terminal in a time division manner. In this case, the base station 31 needs to select an area from the area 71 and the area 72, for example, the area 71 as a target area, and send a PBCH to the target area, for example, the area 71 within a current activation period of the IoT terminal, and send a PBCH to the area 72 within a next activation period of the IoT terminal. As shown in FIG. 8, the base station 31 divides the current activation period of the IoT terminal into a first 80-millisecond time period and a last 40-millisecond time period, and sends a PBCH to the area 71 for a plurality of times within the first 80 milliseconds. 711, 712, 713 and 714 indicate narrow beams sent by the base station 31 to the area 71 within the 80 milliseconds in a time division manner. Optionally, the base station 31 sequentially sends the narrow beam 711, the narrow beam 712, the narrow beam 713, and the narrow beam 714 within time periods T1, T2, T3, and T4. Alternatively, the base station 31 may divide the current activation period of the IoT terminal into a time period of first 40 milliseconds and a time period of last 80 milliseconds, and send a PBCH to the area 71 for a plurality of times within the last 80 milliseconds.

It may be understood that longer duration in which the base station sends a PBCH to an area indicates a greater repetition count that the base station sends a PBCH to the area. As shown in FIG. 8, if the base station 31 sends a PBCH to the area 72 within the remaining 40 milliseconds, a repetition count that the base station 31 repeatedly sends a PBCH within the 40 milliseconds is less than a repetition count that the base station 31 sends a PBCH within the first 80 milliseconds. Because both the channel receive time windows of the terminal 34 and the terminal 36 are 80 milliseconds, a quantity of narrow beams received by the terminal 34 is greater than a quantity of narrow beams received by the terminal 36. As a result, the terminal 34 may parse, from noise, information carried on the PBCH. However, because the quantity of narrow beams received by the terminal 36 is insufficient to parse, from the noise, information carried on the PBCH. Therefore, as shown in FIG. 8, the base station 31 repeatedly sends the PBCH to the area 71 only within the first 80 milliseconds of the current activation period of the IoT terminal, and does not send the PBCH to the area 72 within the remaining 40 milliseconds, because even if the base station 31 sends the PBCH to the area 72 within the remaining 40 milliseconds, the terminal 36 may still fail to parse, from the noise, the information carried on the PBCH.

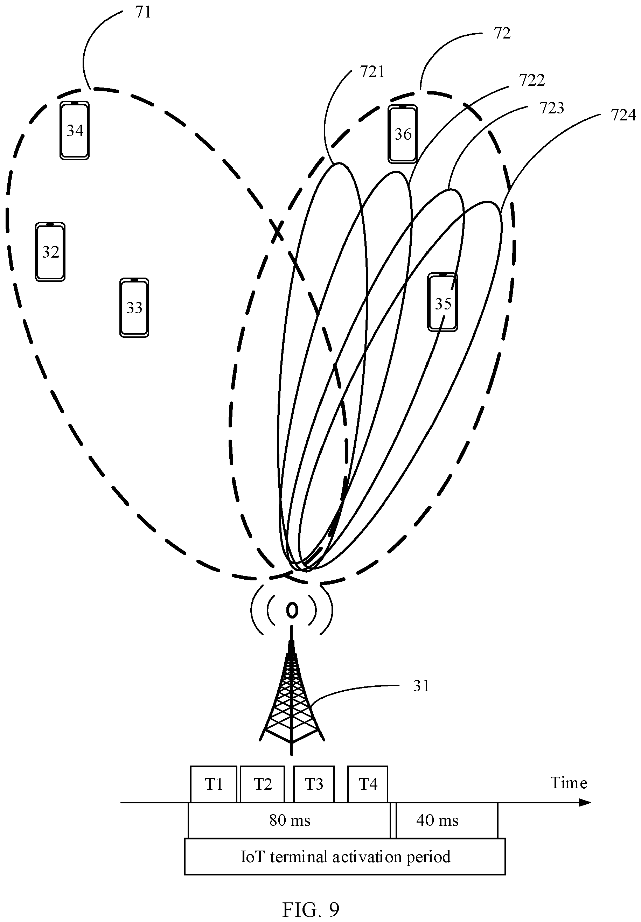

As shown in FIG. 9, within a next activation period of the IoT terminal, the base station 31 repeatedly sends a PBCH to the area 72 within the first 80 milliseconds, and does not send a PBCH to the area 71 within the remaining 40 milliseconds. A specific principle is consistent with a principle shown in FIG. 8, and details are not described herein again. Specifically, 721, 722, 723, and 724 indicate narrow beams sent by the base station 31 to the area 72 in a time division manner within the 80 milliseconds. Optionally, the base station 31 sequentially sends the narrow beam 721, the narrow beam 722, the narrow beam 723, and the narrow beam 724 within time periods T1, T2, T3, and T4. Alternatively, the base station 31 may repeatedly send a PBCH to the area 72 within the last 80 milliseconds of the next activation period of the IoT terminal.

In addition, in this embodiment, that the sector is divided into two areas is used as an example. This embodiment may also be applicable to a scenario in which the sector is divided into at least three areas. A specific implementation is similar to an implementation in the embodiment shown in FIG. 7, FIG. 8, or FIG. 9, and details are not described herein again.

In addition, in this embodiment, that the sector is divided into a plurality of areas is used as an example. This embodiment may also be applicable to a scenario in which an omnidirectional cell is divided into a plurality of areas. A specific implementation is similar to an implementation in the embodiment shown in FIG. 7, FIG. 8, or FIG. 9, and details are not described herein again.

In this embodiment, instead of sending information to each area in the plurality of areas, the base station sends the information carried by the channel with a limited repetition count to the target area in the plurality of areas within the activation period of the IoT terminal. This saves radio resources. In addition, the base station does not need to evenly allocate the activation period of the IoT terminal. When sending the information to the target area, the base station may occupy the activation period of the IoT terminal for a relatively long time. This further improves a coverage capability and a coverage gain of the channel in the target area.

It may be understood that some or all of the steps or operations in the foregoing embodiments are merely examples. In this embodiment of this application, other operations or variations of various operations may be further performed. In addition, the steps may be performed in different sequences presented in the foregoing embodiments, and not all operations in the foregoing embodiments may need to be performed.

It may be understood that, in the foregoing embodiments, operations or steps implemented by the network device (for example, the base station) may also be implemented by a component (for example, a chip or a circuit) that can be applied to the network device.

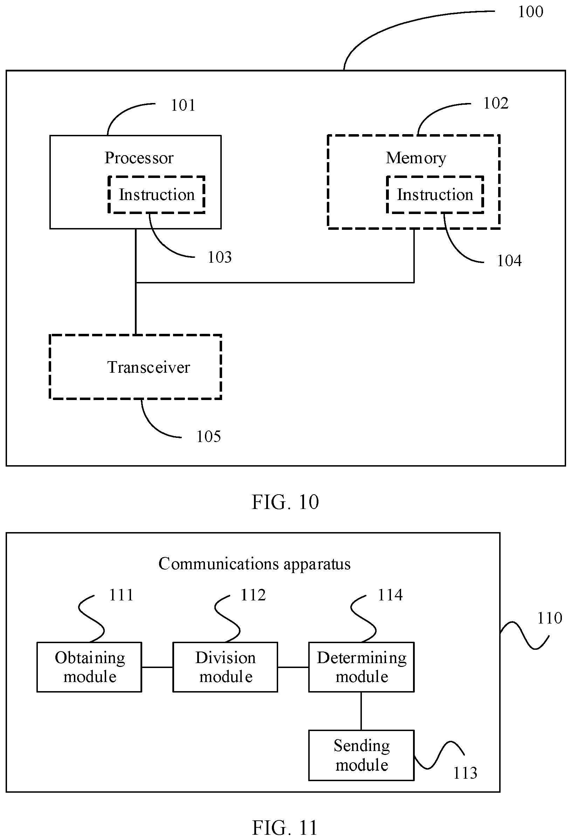

FIG. 10 is a schematic diagram of a structure of a communications apparatus, which, in the specific form displayed, is not according to the claims. The communications apparatus may be configured to implement a method that corresponds to the network device (for example, the base station) described in the foregoing method embodiments. For details, refer to the descriptions in the foregoing method embodiments.

The communications apparatus 100 may include one or more processors 101. The processor 101 may also be referred to as a processing unit, and may implement a specific control function. The processor 101 may be a general-purpose processor, a dedicated processor, or the like.

In a possible design, the processor 101 may alternatively store an instruction 103, and the instruction may be run by the processor, so that the communications apparatus 100 performs the method that corresponds to the network device and that is described in the foregoing method embodiments.

In still another possible design, the communications apparatus 100 may include a circuit. The circuit may implement a sending, receiving, or communication function in the foregoing method embodiments.

Optionally, the communications apparatus 100 may include one or more memories 102. The memory stores an instruction 104 or intermediate data. The instruction 104 may be run on the processor, so that the communications apparatus 100 performs the method described in the foregoing embodiments. Optionally, the memory may further store other related data. Optionally, the processor may also store an instruction and/or data. The processor and the memory may be separately disposed, or may be integrated together.

Optionally, the apparatus 100 may further include a transceiver 105.

The processor 101 may be referred to as a processing unit. The transceiver 105 may be referred to as a transceiver unit, a transceiver device, a transceiver circuit, a transceiver, or the like, and is configured to implement sending and receiving functions of the communications apparatus.

If the communications apparatus is configured to implement an operation corresponding to the network device in the embodiment shown in FIG. 3, for example, the transceiver may send information to terminals in different areas of the plurality of areas at different time points, and the information is carried on the channel with a maximum repetition count less than a threshold. The transceiver may further complete another corresponding communication function. The processor is configured to complete a corresponding determining or control operation, and optionally may further store a corresponding instruction in the memory. For a specific processing manner of each component, refer to related descriptions in the foregoing embodiments.

The processor and the transceiver described in this application may be implemented on an integrated circuit (integrated circuit, IC), an analog IC, a radio frequency integrated circuit RFIC, a hybrid signal IC, an application-specific integrated circuit (application specific integrated circuit, ASIC), a printed circuit board (printed circuit board, PCB), an electronic device, or the like. The processor and the transceiver may also be manufactured by using various 1C technologies, for example, a complementary metal oxide semiconductor (complementary metal oxide semiconductor, CMOS), an N-channel metal-oxide-semiconductor (nMetal-oxide-semiconductor, NMOS), a P-channel metal-oxide-semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

Optionally, the communications apparatus may be an independent device or may be a part of a larger device. For example, the device may be:
(1) an independent integrated circuit (IC), a chip, or a chip system or subsystem;
(2) a set having one or more ICs, where optionally, the IC set may also include a storage component configured to store data and/or an instruction;
(3) an ASIC, for example, a modem (MSM);
(4) a module that can be embedded in another device;
(5) a receiver, a terminal, a cellular phone, a wireless device, a handheld phone, a mobile unit, a network device, or the like; or
(6) another device or the like.

FIG. 11 is a schematic diagram of a structure of a communications apparatus according to an embodiment of this application. As shown in FIG. 11, the communications apparatus 110, which according to the invention is a base station and wherein not all of the features required by the claimed invention are mentioned below, includes an obtaining module 111, a division module 112, and a sending module 113. The obtaining module 111 is configured to obtain position information of a terminal in a cell relative to a network device. The division module 112 is configured to divide the cell into a plurality of areas based on the position information of the terminal in the cell relative to the network device. The sending module 113 is configured to send information to terminals in different areas of the plurality of areas at different time points, where the information is carried on a channel with a maximum repetition count less than a threshold.

In FIG. 11, further, the channel with a maximum repetition count less than a threshold includes a physical broadcast channel PBCH.

In a possible manner, the division module 112 is specifically configured to divide the cell into a plurality of areas of a same size based on the position information of the terminal in the cell relative to the network device.

In another possible manner, when the division module 112 unequally divides the cell into a plurality of areas based on the position information of the terminal in the cell relative to the network device, the division module 112 is specifically configured to: determine a terminal that is farthest away from the network device in the cell based on the position information of the terminal in the cell relative to the network device; and divide the cell into the plurality of areas based on position information of a terminal that is farthest away from the network device in the cell. Optionally, some of the plurality of areas are of different sizes.

Optionally, the communications apparatus may further include: a determining module 114, configured to: before the sending module sends information to terminals in different areas of the plurality of areas at different time points, determine at least one target area from the plurality of areas based on terminal activation period and a channel receive time window corresponding to a terminal in each of the plurality of areas, where a terminal in the at least one target area receives the information within the terminal activation period.

Optionally, the division module 112 may be further configured to divide the terminal activation period into a plurality of time periods based on a channel receive time window corresponding to the terminal in the at least one target area, where the plurality of time periods include a target time period corresponding to each of the at least one target area; and when sending the information to the terminal in different areas of the plurality of areas at different time points, the sending module 113 is specifically configured to send, within the target time period, the information to a terminal in the target area corresponding to the target time period for a plurality of times.

Optionally, a beam width corresponding to the information is related to a size of the area in which the terminal receives the information.

The communications apparatus in the embodiment shown in FIG. 11, which according to the invention is a base station, may be configured to perform the technical solution in the foregoing method embodiments. For an implementation principle and a technical effect of the communications apparatus, further refer to related descriptions in the method embodiments.

It should be understood that division into the foregoing modules of the communications apparatus shown in FIG. 10 to FIG. 11 is merely logical function division. In actual implementation, all or some units may be integrated into one physical entity, or may be physically separated. In addition, all of the modules may be implemented in a form of software invoked by a processing element or in a form of hardware. Alternatively, some of the modules may be implemented in a form of software invoked by a processing element, and some of the modules may be implemented in a form of hardware. For example, the determining module may be an independently disposed processing element, or may be integrated into the communications apparatus, for example, a chip of the network device for implementation. In addition, the determining module may be stored in a memory of the communications apparatus in a form of a program and invoked by a processing element of the communications apparatus to perform a function of each of the foregoing modules. Implementations of other modules are similar. In addition, all or some of the modules may be integrated together, or may be implemented independently. The processing element may be an integrated circuit with a signal processing capability. In an implementation process, steps in the method or the modules can be implemented by using a hardware integrated logical circuit in the processing element, or by using instructions in a form of software.

For example, the foregoing modules may be configured as one or more integrated circuits for implementing the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA). For yet another example, when one of the foregoing modules is implemented in a form of scheduling a program by a processing element, the processing element may be a general purpose processor, for example, a central processing unit (Central Processing Unit, CPU) or another processor that can invoke the program. For still another example, the modules may be integrated together, and implemented in a form of a system-on-a-chip (system-on-a-chip, SOC).

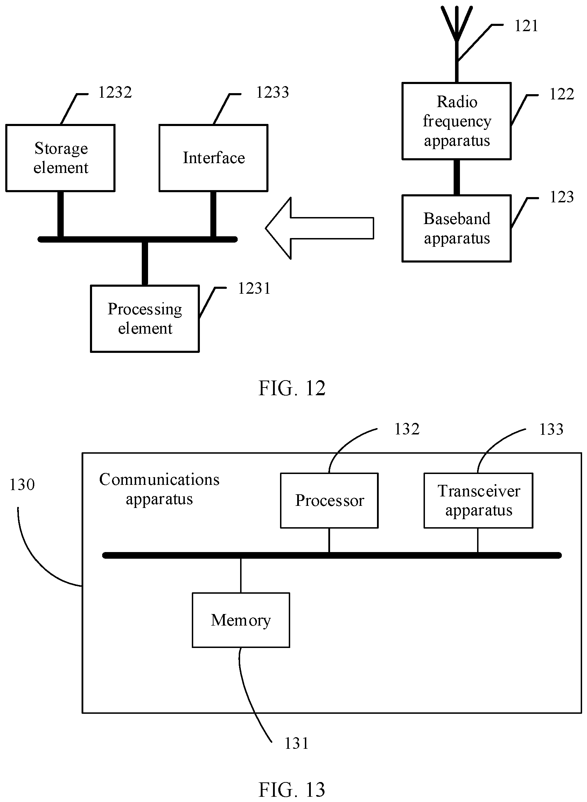

FIG. 12 is a schematic diagram of a structure of still another communications apparatus according to an embodiment of this application, which in the specifc form shown is not according to the appended claims. The communications apparatus may specifically be a base station. As shown in FIG. 12, the base station includes an antenna 121, a radio frequency apparatus 122, and a baseband apparatus 123. The antenna 121 is connected to the radio frequency apparatus 122. In an uplink direction, the radio frequency apparatus 122 receives, through the antenna 121, information sent by a terminal, and sends the information sent by the terminal, to the baseband apparatus 123 for processing. In a downlink direction, the baseband apparatus 123 processes the information of the terminal and sends the information to the radio frequency apparatus 122. The radio frequency apparatus 122 processes the information of the terminal and then sends the information to the terminal through the antenna 121.

The foregoing communications apparatus may be located at the baseband apparatus 123. In an implementation, the foregoing units are implemented by a processing element scheduling a program. For example, the baseband apparatus 123 includes a processing element and a storage element, and the processing element 1231 invokes a program stored in the storage element 1232, to perform the method in the foregoing method embodiment. In addition, the baseband apparatus 123 may further include an interface 1233, configured to exchange information with the radio frequency apparatus 122. The interface is, for example, a common public radio interface (common public radio interface, CPRI).

In another implementation, the foregoing modules may be configured as one or more processing elements for implementing the foregoing method, and the processing elements are disposed on the baseband apparatus 123. The processing element herein may be an integrated circuit, for example, one or more ASICs, one or more DSPs, or one or more FPGAs. The integrated circuits may be integrated together to form a chip.

For example, the foregoing modules may be integrated together and implemented in a form of a system-on-a-chip (system-on-a-chip, SOC). For example, the baseband apparatus 123 includes an SOC chip, configured to implement the foregoing method. The processing element 1231 and the storage element 1232 may be integrated into the chip, and the processing element 1231 invokes the program stored in the storage element 1232, to implement the foregoing method or functions of the foregoing modules. Alternatively, at least one integrated circuit may be integrated in the chip to implement the foregoing method or functions of the foregoing modules. Alternatively, the foregoing implementations may be combined, so that functions of some units are implemented by the processing element invoking a program, and functions of some units are implemented by using an integrated circuit.

Regardless of a manner, the communications apparatus includes at least one processing element, a storage element, and a communications interface, and the at least one processing element is configured to perform the method provided in the foregoing method embodiments. The processing element may perform some or all of the steps in the foregoing method embodiment in a first manner of executing the program stored in the storage element, or in a second manner, to be specific, a manner of using a hardware integrated logic circuit in the processing element in combination with an instruction. Certainly, the method provided in the foregoing method embodiment may alternatively be performed by combining the first manner with the second manner.

The processing element herein is the same as that described in the foregoing, may be a general purpose processor such as a central processing unit (Central Processing Unit, CPU); may be one or more integrated circuits configured to implement the foregoing method, for example, one or more application-specific integrated circuits (Application Specific Integrated Circuit, ASIC); or may be one or more microprocessors (digital signal processor, DSP), one or more field programmable gate arrays (Field Programmable Gate Array, FPGA) or the like. The storage element may be a memory, or may be a general term of a plurality of storage elements.

FIG. 13 is a schematic diagram of a structure of still another communications apparatus according to an embodiment of this application, which, in the displayed form, is not according to the claims. As shown in FIG. 13, the communications apparatus 130 includes a processor 132 and a transceiver apparatus 133. The transceiver apparatus 133 receives, from a network device, information carried on a channel with a limited repetition count. Further, the apparatus further includes a memory 131, configured to store a computer program or an instruction, and the processor 132 is configured to invoke the program or the instruction.

The communications apparatus in the embodiment shown in FIG. 13 may be configured to perform the technical solution in the foregoing method embodiments. For an implementation principle and a technical effect of the communications apparatus, further refer to related descriptions in the method embodiments. Details are not described herein again. The communications apparatus may be a terminal, or may be a component (for example, a chip or a circuit) of the terminal.

In FIG. 13, the transceiver apparatus 133 may be connected to an antenna. In downlink, the transceiver apparatus 133 receives, by using the antenna, information sent by a base station, and sends the information to the processor 132 for processing. In uplink, the processor 132 processes data of the terminal, and sends the data to the base station by using the transceiver apparatus 133.

Some or all of the foregoing modules may be implemented in a form of an integrated circuit that is embedded in a chip of the terminal. In addition, they may be separately implemented, or may be integrated together. The foregoing modules may be configured as one or more integrated circuits for implementing the foregoing method, for example, one or more application-specific integrated circuits (Application Specific Integrated Circuit, ASIC), one or more microprocessors (digital signal processor, DSP), or one or more field programmable gate arrays (Field Programmable Gate Array, FPGA).

An embodiment of this application further provides a computer-readable storage medium. The computer-readable storage medium stores a computer program. When the computer program runs on a computer, the computer performs the terminal coverage method in the foregoing embodiment.

In addition, an embodiment of this application further provides a computer program product. The computer program product includes a computer program. When the computer program product runs on a computer, the computer is enabled to perform the terminal coverage method in the foregoing embodiment.

All or some of the foregoing embodiments may be implemented through software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to this application are generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk), or the like.

## Claims

1. A method for sending information, comprising:
obtaining (S201), by a base station, position information of a terminal in a cell relative to the base station, wherein the position information is a distance and a direction from the base station to the terminal;
dividing (S202), by the base station, the cell into a plurality of areas based on the distance and the direction of the terminal in the cell relative to the base station, such that the terminal is not located in an overlapping part of adjacent areas; and
sending (S203), by the base station, information to terminals in different areas of the plurality of areas at different time points, wherein the information is carried on a physical broadcast channel, PBCH, with a maximum repetition count less than a threshold.

2. The method according to claim 1, wherein the dividing (S201), by the base station, the cell into a plurality of areas based on the position information of the terminal in the cell relative to the base station comprises:
dividing, by the base station, the cell into the plurality of areas of a same size based on the position information of the terminal in the cell relative to the base station.

3. The method according to claim 1 wherein the dividing (S201), by the base station, the cell into a plurality of areas based on the position information of the terminal in the cell relative to the base station comprises:
determining, by the base station, a terminal that is farthest away from the base station in the cell based on the position information of the terminal in the cell relative to the base station; and
dividing, by the base station, the cell into the plurality of areas based on position information of the terminal that is farthest away from the base station in the cell.

4. The method according to any one of claims 1 to 3, wherein before the sending (S203), by the base station, information to terminals in different areas of the plurality of areas at different time points, the method further comprises:
determining, by the base station, at least one area from the plurality of areas based on terminal activation period and a channel receive time window corresponding to a terminal in each of the plurality of areas, wherein a terminal in the determined at least one area receives the information within the terminal activation period, wherein the sending (S203), by the base station, information to terminals in different areas of the plurality of areas at different time points comprises:
dividing, by the base station, the terminal activation period into a plurality of time periods based on a channel receive time window corresponding to the terminal in the determined at least one area, wherein the plurality of time periods comprise a target time period corresponding to each of the determined at least one area; and
sending, by the base station within the target time period, the information to a terminal in the area corresponding to the target time period for a plurality of times.

5. Abase station (110), comprising:
an obtaining module (111), configured to obtain position information of a terminal in a cell relative to the base station, wherein the position information is a distance and a direction from the base station to the terminal;
a division module (112), configured to divide the cell into a plurality of areas based on the distance and the direction of the terminal in the cell relative to the base station such that the terminal is not located in an overlapping part of adjacent areas; and
a sending module (113), configured to send information to terminals in different areas of the plurality of areas at different time points, wherein the information is carried on a physical broadcast channel. PBCH, with a maximum repetition count less than a threshold.

6. The base station according to claim 5, wherein the division module (112) is specifically configured to divide the cell into a plurality of areas of a same size based on the position information of the terminal in the cell relative to the base station.

7. The base station according to claim 5 or 6, wherein when the division module (112) unequally divides the cell into a plurality of areas based on the position information of the terminal in the cell relative to the base station, the division module is specifically configured to:
determine a terminal that is farthest away from the base station in the cell based on the position information of the terminal in the cell relative to the base station; and
divide the cell into the plurality of areas based on position information of a terminal that is farthest away from the base station in the cell.

8. The method according to claim 3 or base station according to claim 7, wherein some of the plurality of areas are of different sizes.

9. The base station according to any one of claims 5 to 8, wherein the base station further comprises a determining module (114); wherein the determining module (114) is configured to: before the sending module sends information to terminals in different areas of the plurality of areas at different time points, determine at least one area from the plurality of areas based on terminal activation period and a channel receive time window corresponding to a terminal in each of the plurality of areas, wherein a terminal in the determined at least one area receives the information within the terminal activation period, wherein the division module (112) is further configured to divide the terminal activation period into a plurality of time periods based on a channel receive time window corresponding to the terminal in the determined at least one area, wherein the plurality of time periods comprise a target time period corresponding to each of the determined at least one area; and
when sending the information to the terminal in different areas of the plurality of areas at different time points, the sending module is specifically configured to send, within the target time period, the information to a terminal in the area corresponding to the target time period for a plurality of times.

10. The method according to any one of claims 1 to 4 or base station according to any one of claims 5 to 9, wherein a beam width corresponding to the information is related to a size of the area in which the terminal receives the information.

11. A computer-readable storage medium, wherein the computer-readable storage medium stores a computer program, and when running on a computer, the computer program enables the computer to perform the method according to any one of claims 1 to 4.

## Patentansprüche

1. Verfahren zum Senden von Informationen, umfassend:
Erlangen (S201), durch eine Basisstation, von Positionsinformationen eines Endgeräts in einer Funkzelle relativ zu der Basisstation, wobei die Positionsinformationen eine Entfernung und eine Richtung von der Basisstation zu dem Endgerät sind;
derartiges Teilen (S202), durch die Basisstation, der Funkzelle in eine Vielzahl von Bereichen basierend auf der Entfernung und der Richtung des Endgeräts in der Funkzelle relativ zu der Basisstation, dass sich das Endgerät nicht in einem überlappenden Teil angrenzender Bereiche befindet; und
Senden (S203), durch die Basisstation, von Informationen an Endgeräte in unterschiedlichen Bereichen der Vielzahl von Bereichen zu unterschiedlichen Zeitpunkten, wobei die Informationen auf einem physischen Broadcast-Kanal, PBCH, mit einer maximalen Wiederholungszählung, die kleiner als ein Schwellenwert ist, übertragen werden.

2. Verfahren nach Anspruch 1, wobei das Teilen (S201), durch die Basisstation, der Funkzelle in eine Vielzahl von Bereichen basierend auf den Positionsinformationen des Endgeräts in der Funkzelle relativ zu der Basisstation umfasst:
Teilen, durch die Basisstation, der Funkzelle in die Vielzahl von Bereichen derselben Größe basierend auf den Positionsinformationen des Endgeräts in der Funkzelle relativ zu der Basisstation.

3. Verfahren nach Anspruch 1, wobei das Teilen (S201), durch die Basisstation, der Funkzelle in eine Vielzahl von Bereichen basierend auf den Positionsinformationen des Endgeräts in der Funkzelle relativ zu der Basisstation umfasst:
Bestimmen, durch die Basisstation, eines Endgeräts, das von der Basisstation in der Funkzelle am weitesten weg ist, basierend auf den Positionsinformationen des Endgeräts in der Funkzelle relativ zu der Basisstation; und
Teilen, durch die Basisstation, der Funkzelle in die Vielzahl von Bereichen basierend auf Positionsinformationen des Endgeräts, das von der Basisstation in der Funkzelle am weitesten weg ist.

4. Verfahren nach einem der Ansprüche 1 bis 3, wobei vor dem Senden (S203), durch die Basisstation, von Informationen an Endgeräte in unterschiedlichen Bereichen der Vielzahl von Bereichen zu unterschiedlichen Zeitpunkten, das Verfahren ferner umfasst:
Bestimmen, durch die Basisstation, mindestens eines Bereichs von der Vielzahl von Bereichen basierend auf einer Endgerätaktivierungsdauer und eines Kanalempfangszeitfensters, das einem Endgerät in jedem der Vielzahl von Bereichen entspricht, wobei ein Endgerät in dem bestimmten mindestens einen Bereich die Informationen innerhalb der Endgerätaktivierungsdauer empfängt, wobei das Senden (S203), durch die Basisstation, von Informationen an Endgeräte in unterschiedlichen Bereichen der Vielzahl von Bereichen zu unterschiedlichen Zeitpunkten umfasst:
Teilen, durch die Basisstation, der Endgerätaktivierungsdauer in eine Vielzahl von Zeitdauern basierend auf einem Kanalempfangszeitfenster, das dem Endgerät in dem bestimmten mindestens einen Bereich entspricht, wobei die Vielzahl von Zeitdauern eine Zielzeitdauer, die jedem des bestimmten mindestens einen Bereichs entspricht, umfasst; und
Senden, durch die Basisstation innerhalb der Zielzeitdauer, der Informationen an ein Endgerät in dem Bereich, der der Zielzeitdauer für eine Vielzahl von Zeiten entspricht.

5. Basisstation (110), umfassend:
ein Erlangungsmodul (111), das konfiguriert ist, um Positionsinformationen eines Endgeräts in einer Funkzelle relativ zu der Basisstation zu erlangen, wobei die Positionsinformationen eine Entfernung und eine Richtung von der Basisstation zu dem Endgerät sind;
ein Teilungsmodul (112), das konfiguriert ist, um die Funkzelle in eine Vielzahl von Bereichen basierend auf der Entfernung und der Richtung des Endgeräts in der Funkzelle relativ zu der Basisstation derart zu teilen, dass sich das Endgerät nicht in einem überlappenden Teil angrenzender Bereiche befindet; und
ein Sendemodul (113), das konfiguriert ist, um Informationen an Endgeräte in unterschiedlichen Bereichen der Vielzahl von Bereichen zu unterschiedlichen Zeitpunkten zu senden, wobei die Informationen auf einem physischen Broadcast-Kanal, PBCH, mit einer maximalen Wiederholungszählung, die kleiner als ein Schwellenwert ist, übertragen werden.

6. Basisstation nach Anspruch 5, wobei das Teilungsmodul (112) speziell konfiguriert ist, um die Funkzelle in eine Vielzahl von Bereichen derselben Größe basierend auf den Positionsinformationen des Endgeräts in der Funkzelle relativ zu der Basisstation zu teilen.

7. Basisstation nach Anspruch 5 oder 6, wobei, wenn das Teilungsmodul (112) die Funkzelle in eine Vielzahl von Bereichen basierend auf den Positionsinformationen des Endgeräts in der Funkzelle relativ zu der Basisstation ungleichmäßig teilt, das Teilungsmodul speziell konfiguriert ist zum:
Bestimmen eines Endgeräts, das von der Basisstation in der Funkzelle am weitesten weg ist, basierend auf den Positionsinformationen des Endgeräts in der Funkzelle relativ zu der Basisstation; und
Teilen der Funkzelle in die Vielzahl von Bereichen basierend auf Positionsinformationen eines Endgeräts, das von der Basisstation in der Funkzelle am weitesten weg ist.

8. Verfahren nach Anspruch 3 oder Basisstation nach Anspruch 7, wobei einige der Vielzahl von Bereichen von unterschiedlicher Größe sind.

9. Basisstation nach einem der Ansprüche 5 bis 8, wobei die Basisstation ferner ein Bestimmungsmodul (114) umfasst; wobei das Bestimmungsmodul (114) konfiguriert ist zum: bevor das Sendemodul Informationen an Endgeräte in unterschiedlichen Bereichen der Vielzahl von Bereichen zu unterschiedlichen Zeitpunkten sendet, Bestimmen mindestens eines Bereichs von der Vielzahl von Bereichen basierend auf der Endgerätaktivierungsdauer und eines Kanalempfangszeitfensters, das einem Endgerät in jedem der Vielzahl von Bereichen entspricht, wobei ein Endgerät in dem bestimmten mindestens einen Bereich die Informationen innerhalb der Endgerätaktivierungsdauer empfängt, wobei das Teilungsmodul (112) ferner konfiguriert ist, um die Endgerätaktivierungsdauer in eine Vielzahl von Zeitdauern basierend auf einem Kanalempfangszeitfenster, das dem Endgerät in dem bestimmten mindestens einen Bereich entspricht, zu teilen, wobei die Vielzahl von Zeitdauern eine Zielzeitdauer, die jedem des bestimmten mindestens einen Bereichs entspricht, umfasst; und
wenn die Informationen an das Endgerät in unterschiedlichen Bereichen der Vielzahl von Bereichen zu unterschiedlichen Zeitpunkten gesendet werden, das Sendemodul speziell konfiguriert ist, um die Informationen, innerhalb der Zielzeitdauer, an ein Endgerät in dem Bereich, der der Zielzeitdauer für eine Vielzahl von Zeiten entspricht, zu senden.

10. Verfahren nach einem der Ansprüche 1 bis 4 oder Basisstation nach einem der Ansprüche 5 bis 9, wobei eine Strahlbreite, die den Informationen entspricht, eine Größe des Bereichs, in dem das Endgerät die Informationen empfängt, betrifft.

11. Computerlesbares Speichermedium, wobei das computerlesbare Speichermedium ein Computerprogramm speichert und, wenn es auf einem Computer ausgeführt wird, das Computerprogramm den Computer aktiviert, um das Verfahren nach einem der Ansprüche 1 bis 4 durchzuführen.

## Revendications

1. Procédé d'envoi d'informations, comprenant :
l'obtention (S201), par une station de base, d'informations de position d'un terminal dans une cellule par rapport à la station de base, dans lequel les informations de position sont une distance et une direction de la station de base au terminal ;
la division (S202), par la station de base, de la cellule en une pluralité de zones en fonction de la distance et de la direction du terminal dans la cellule par rapport à la station de base, de telle sorte que le terminal ne soit pas situé dans une partie de chevauchement de zones adjacentes ; et
l'envoi (S203), par la station de base, d'informations à des terminaux dans différentes zones de la pluralité de zones à différents moments, les informations étant transportées sur un canal de diffusion physique, PBCH, avec un décompte de répétitions maximal inférieur à un seuil.

2. Procédé selon la revendication 1, dans lequel la division (S201), par la station de base, de la cellule en une pluralité de zones en fonction des informations de position du terminal dans la cellule par rapport à la station de base comprend :
la division, par la station de base, de la cellule en la pluralité de zones de même taille en fonction des informations de position du terminal dans la cellule par rapport à la station de base.

3. Procédé selon la revendication 1, dans lequel la division (S201), par la station de base, de la cellule en une pluralité de zones en fonction des informations de position du terminal dans la cellule par rapport à la station de base comprend :
la détermination, par la station de base, d'un terminal qui est le plus éloigné de la station de base dans la cellule en fonction des informations de position du terminal dans la cellule par rapport à la station de base ; et
la division, par la station de base, de la cellule en la pluralité de zones en fonction des informations de position du terminal qui est le plus éloigné de la station de base dans la cellule.

4. Procédé selon l'une quelconque des revendications 1 à 3, dans lequel avant l'envoi (S203), par la station de base, d'informations à des terminaux dans différentes zones de la pluralité de zones à différents moments, le procédé comprend en outre :
la détermination, par la station de base, d'au moins une zone à partir de la pluralité de zones en fonction de la période d'activation du terminal et d'une fenêtre temporelle de réception de canal correspondant à un terminal dans chacune de la pluralité de zones, dans lequel un terminal dans l'au moins une zone déterminée reçoit les informations à l'intérieur de la période d'activation du terminal, dans lequel l'envoi (S203), par la station de base, d'informations à des terminaux dans différentes zones de la pluralité de zones à différents moments comprend :
la division, par la station de base, de la période d'activation du terminal en une pluralité de périodes de temps en fonction d'une fenêtre temporelle de réception de canal correspondant au terminal dans l'au moins une zone déterminée, dans lequel la pluralité de périodes de temps comprennent une période de temps cible correspondant à chacune de l'au moins une zone déterminée ; et
l'envoi, par la station de base à l'intérieur de la période de temps cible, des informations à un terminal dans la zone correspondant à la période de temps cible pour une pluralité de fois.

5. Station de base (110), comprenant :
un module d'obtention (111), configuré pour obtenir des informations de position d'un terminal dans une cellule par rapport à la station de base, dans lequel les informations de position sont une distance et une direction de la station de base au terminal ;
un module de division (112), configuré pour diviser la cellule en une pluralité de zones en fonction de la distance et de la direction du terminal dans la cellule par rapport à la station de base de telle sorte que le terminal ne soit pas situé dans une partie de chevauchement de zones adjacentes ; et
un module d'envoi (113), configuré pour envoyer des informations à des terminaux dans différentes zones de la pluralité de zones à différents moments, dans lequel les informations sont transportées sur un canal de diffusion physique, PBCH, avec un nombre de répétitions maximal inférieur à un seuil.

6. Station de base selon la revendication 5, dans laquelle le module de division (112) est spécifiquement configuré pour diviser la cellule en une pluralité de zones d'une même taille en fonction des informations de position du terminal dans la cellule par rapport à la station de base.

7. Station de base selon la revendication 5 ou 6, dans laquelle lorsque le module de division (112) divise de manière inégale la cellule en une pluralité de zones en fonction des informations de position du terminal dans la cellule par rapport à la station de base, le module de division est spécifiquement configuré pour :
déterminer un terminal qui est le plus loin de la station de base dans la cellule en fonction des informations de position du terminal dans la cellule par rapport à la station de base ; et
diviser la cellule en la pluralité de zones en fonction des informations de position d'un terminal qui est le plus éloigné de la station de base dans la cellule.

8. Procédé selon la revendication 3 ou station de base selon la revendication 7, dans lequel certaines de la pluralité de zones sont de tailles différentes.

9. Station de base selon l'une quelconque des revendications 5 à 8, dans laquelle la station de base comprend en outre un module de détermination (114) ; dans laquelle le module de détermination (114) est configuré pour : avant que le module d'envoi n'envoie des informations à des terminaux dans différentes zones de la pluralité de zones à différents moments, déterminer au moins une zone à partir de la pluralité de zones en fonction d'une période d'activation du terminal et d'une fenêtre de temps de réception de canal correspondant à un terminal dans chacune de la pluralité de zones, dans laquelle un terminal dans l'au moins une zone déterminée reçoit les informations à l'intérieur de la période d'activation du terminal, dans laquelle le module de division (112) est en outre configuré pour diviser la période d'activation du terminal en une pluralité de périodes de temps en fonction d'une fenêtre de temps de réception de canal correspondant au terminal dans l'au moins une zone déterminée, dans laquelle la pluralité de périodes de temps comprennent une période de temps cible correspondant à chacune de l'au moins une zone déterminée ; et
lors de l'envoi des informations au terminal dans différentes zones de la pluralité de zones à différents moments, le module d'envoi est spécifiquement configuré pour envoyer, à l'intérieur de la période de temps cible, les informations à un terminal dans la zone correspondant à la période de temps cible pour une pluralité de fois.

10. Procédé selon l'une quelconque des revendications 1 à 4 ou station de base selon l'une quelconque des revendications 5 à 9, dans lequel une largeur de faisceau correspondant aux informations est liée à une taille de la zone dans laquelle le terminal reçoit les informations.

11. Support de stockage lisible par ordinateur, dans lequel le support de stockage lisible par ordinateur stocke un programme informatique, et lorsqu'il est exécuté sur un ordinateur, le programme informatique permet à l'ordinateur d'effectuer le procédé selon l'une quelconque des revendications 1 à 4.
